Europäisches Patentamt

European Patent Office

Office européen des brevets

(19)

(11) Veröffentlichungsnummer: **0 018 673**
**B1**

(12) # EUROPÄISCHE PATENTSCHRIFT

(45) Veröffentlichungstag der Patentschrift:
27.12.84

(21) Anmeldenummer: 80200319.4

(22) Anmeldetag: 10.04.80

(51) Int. Cl.³: **G 01 S 5/16**, G 01 S 11/00,
**F 41 G 3/26**, F 41 J 5/12

(54) Verfahren zum Vermessen von Schussfehlern und Schussfehler-Vermessungsanlage zur Durchführung des Verfahrens.

(30) Priorität: 04.05.79 CH 4181/79

(43) Veröffentlichungstag der Anmeldung:
12.11.80 Patentblatt 80/23

(45) Bekanntmachung des Hinweises auf die Patenterteilung:
27.12.84 Patentblatt 84/52

(84) Benannte Vertragsstaaten:
BE CH DE FR GB IT LI NL SE

(56) Entgegenhaltungen:
CH - A - 578 722
DE - A - 2 302 247
DE - A - 2 402 204
DE - A - 2 408 407
DE - A - 2 734 913
DE - C - 977 816
US - A - 3 793 481
US - A - 3 854 821

(73) Patentinhaber: Löwe, Günter, Weiler Hohn 1,
D-5204 Lohmar 21 - Wahlscheid (DE)

(72) Erfinder: Löwe, Günter, Weiler Hohn 1,
D-5204 Lohmar 21 - Wahlscheid (DE)

(74) Vertreter: Bauer, Wulf, Dr., Wolfgang-Müller-Strasse 12,
D-5000 Köln 51 (Marienburg) (DE)

## Beschreibung

Die Erfindung betrifft ein Verfahren zum Vermessen der Schussfehler beim Schiessen auf ein in der Luft bewegliches Ziel mittels einer Feuerwaffe und zum Aufzeichnen der gemessenen Schussfehler, bei dem die Höhen- und Seitenwinkel des Ziels gegenüber sowie die Entfernung des Ziels von einem Bezugspunkt laufend gemessen und die Daten dieser Messungen in einem Prozessrechner gespeichert werden.

Die Erfindung betrifft ferner eine Schussfehler-Vermessungsanlage zur Durchführung des Verfahrens und nach dem Oberbegriff des Anspruchs 3.

Bei dem aus der DE-OS 2 408 407 bekannten Verfahren der eingangs genannten Art wird die Lage eines Punktes innerhalb eines Messraums (siehe Patentanspruch 1) ermittelt und ein Verfahren zur Messung der Ablage eines Punktes gegenüber einem ortsfesten Ziel (siehe Patentanspruch 2) angegeben. In beiden Fällen der vorgenannten Lehre wird also nicht auf ein in der Luft bewegliches Ziel geschossen, weiterhin wird nicht der Abstand zwischen zwei, sich im Dreidimensionalen bewegenden Körpern (Ziel und Geschoss) bestimmt. Die bekannte Vorrichtung arbeitet mit Winkelmesseinrichtungen, die im Unterschied zu TV-Kameras (Fernsehkameras) nicht ein zweidimensionales, sondern ein eindimensionales Bild liefern und lediglich den Winkel erfassen, unter dem ein Objekt erscheint; eine TV-Kamera ist zusätzlich vorgesehen.

Aus der US-PS 3 793 481 ist ein Verfahren zum Bestimmen des Schussfehlers gegenüber einem bewegten Ziel bekannt, dabei befindet sich das Ziel jedoch im Zweidimensionalen, nämlich auf dem Boden, und nicht in der Luft. Bei einem fliegenden Ziel, zum Beispiel einem Schleppsack, gibt es keine Fläche, in der Geschosse, die das Ziel selbst nicht getroffen haben, eine bleibende Markierung hinterlassen könnten. Somit lässt sich das Verfahren nach der US-PS 3 793 481 nicht auf die Vermessung von Schussfehlern beim Schiessen auf ein in der Luft bewegliches Ziel übertragen. Genügt bei dem bekannten Verfahren nach der US-PS 3 793 481 eine einmalige Messung auf zwei TV-Bildschirmen, so reicht dies bei der Messung des Schussfehlers auf ein in der Luft bewegliches Ziel nicht aus, vielmehr muss hier laufend gemessen werden, da der Einschlag des Geschosses in der Trefferebene nicht wie beim Schiessen auf eine Pappscheibe einen permanenten Eindruck hinterlässt und somit der Durchgang des Geschosses durch die Zielebene erst ermittelt werden muss.

Auch bei dem bekannten Verfahren nach der DE-OS 2 302 247 ist eine feste Zielebene vorgegeben, in der die Geschosse, die das Ziel verfehlt haben, einen bleibenden Einschlag hinterlassen. Es liegen damit ähnliche Verhältnisse wie bei der genannten US-PS 3 793 481 vor.

Bei der bekannten Schussfehler-Vermessungsanlage nach der DE-OS 2 408 407, die als Trefferbestimmungs-System für Schusswaffen bezeichnet ist, ist mit der Waffe eine Messaparatur verbunden, um die Winkelstellung im Augenblick des Abfeuerns zu messen. Eine elektronische Einrichtung erzeugt aus den Winkelstellungen Digitalwerte. Eine TV-Kamera ist in den Winkelrichtungen bewegbar angeordnet, um das Ziel mit der Aufnahmeröhre verfolgen zu können. Es sind Mittel vorhanden zum Messen der Richtung der Sichtziellinie zum Ziel und Mittel zum Messen der Stellung des Zilbildes auf dem TV-Bildschirm, mit einer Entfernungsmessaparatur, um die Entfernung des Ziels vom Geschützt zu bestimmen. Ein Prozessrechner berechnet aus den Digitaldaten bei der Messung der Winkelstellung der Waffe und der Winkelstellung der TV-Kamera und der Stellung des Ziels auf dem Bildschirm sowie aus der Entfernungsmessung quantitativ die Abweichung zwischen der korrekten Ziellinie und der tatsächlichen Ziellinie der Waffe, wobei der Prozessrechner im Augenblick des Abfeuerns der Waffe ausgelöst wird.

Mit dieser vorbekannten Anlage werden die Schussfehler nach folgendem Verfahren bestimmt, es werden folgende Daten gemessen und in einem Prozessrechner gespeichert:
– die Einstellung der TV-Kamera;
– die Entfernung des Ziels vom Geschütz;
– die Winkelstellung der Ziellinie der Waffe;
– die Winkelstellung der Sichtziellinie eines auf der Bildfläche der TV-Kamera registrierten Ziels.

Dann wird im Augenblick des Abfeuerns der Waffe der Prozessrechner eingeschaltet, damit dieser die genaue Ziellinie der Waffe ermittelt, mit der ein Geschoss das Ziel erreicht. Die tatsächliche Ziellinie der Waffe wird dann mit der korrekten Ziellinie verglichen und die Abweichungen zwischen der korrekten Ziellinie und der gemessenen Ziellinie der Waffe werden bestimmt, um eine quantitative Anzeige der Genauigkeit beim Schiessen zu erhalten.

Das bekannte Verfahren und die nach diesem Verfahren arbeitende Anlage gemäss der DE-OS 2 408 407 sind ungenau; da nicht mit scharfer, sondern mit blinder Munition geschossen wird, können nicht die Abstände des Geschosses vom Ziel gemessen werden, sondern nur die Winkelabweichungen des Geschützes von den vermutlich korrekten Winkeleinstellungen unter Berücksichtigung der Ballistik der Geschosse.

Hiervon ausgehend ist es Aufgabe der Erfindung, die Nachteile dieses bekannten Verfahrens und der nach diesem Verfahren arbeitenden Anlage zu vermeiden und ein Verfahren sowie eine Anlage der eingangs genannten Art zu schaffen, bei dem die räumlichen Abstände zwischen Geschoss und Ziel direkt gemessen werden können.

Diese Aufgabe wird verfahrensmässig gelöst durch ein Verfahren mit den Merkmalen des Patentanspruchs 1; vorrichtungsmässig wird sie gelöst durch eine Anlage mit den Merkmalen des Patentanspruchs 3.

Ein Ausführungsbeispiel der erfindungsgemässen Schussfehler-Vermessungs-Analge ist im folgenden anhand der beigefügten Zeichnung ausführlich beschrieben. Es zeigt:

Fig. 1 ein Blockschaltbild der ganzen Schussfehler-Vermessungs-Anlage;

Fig. 2 einen Teil der Speicherplatten, auf dem Ziel und Geschosse abgebildet sind;

Fig. 3 ein Flussdiagramm des Schussfehler-Vermessungs-Vorgangs;

Fig. 4 eine schaubildliche schematische Darstellung der Geschossflugbahn und des Zielweges;

Fig. 5 eine schaubildliche schematische Darstellung der Anordnung der Richt- und Aufnahmegeräte und der Bildebenen, auf denen die Abstände zwischen Geschoss und Ziel ersichtlich sind;

Fig. 6 eine Darstellung des Vermessungs-Resultates.

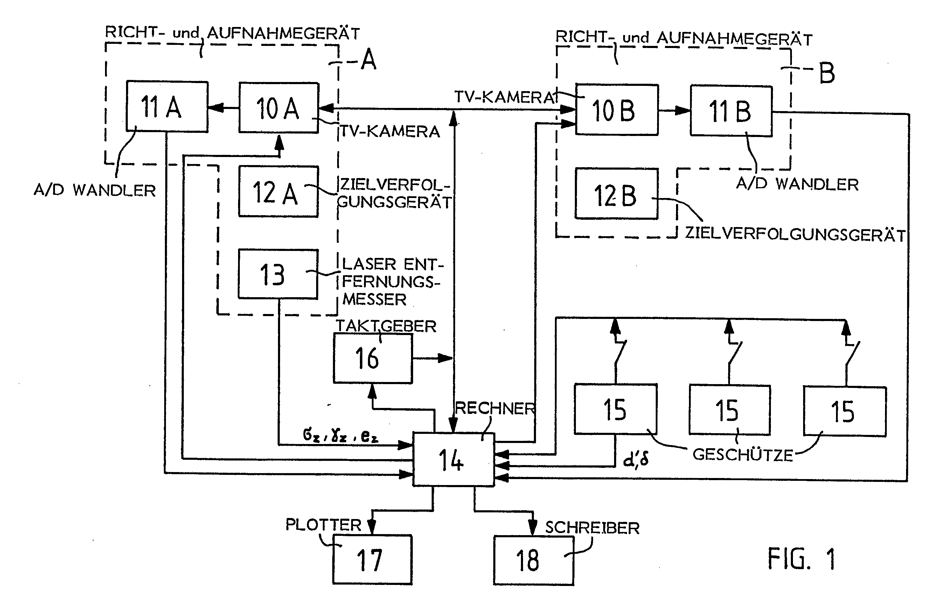

Gemäss Figur 1 weist die Schussfehler-Anlage zwei Richt- und Aufnahmegeräte A und B auf. Diese enthalten je eine Fernsehkamera 10A, 10B (auch TV-Kamera genannt), einen Analog-Digital-Wandler 11A, 11B und ein Infrarot-Zielverfolgungs-Gerät 12A, 12B. Im Richt- und Aufnahmegerät A ist zusätzlich noch ein Laser-Entfernungsmesser 13 angeordnet.

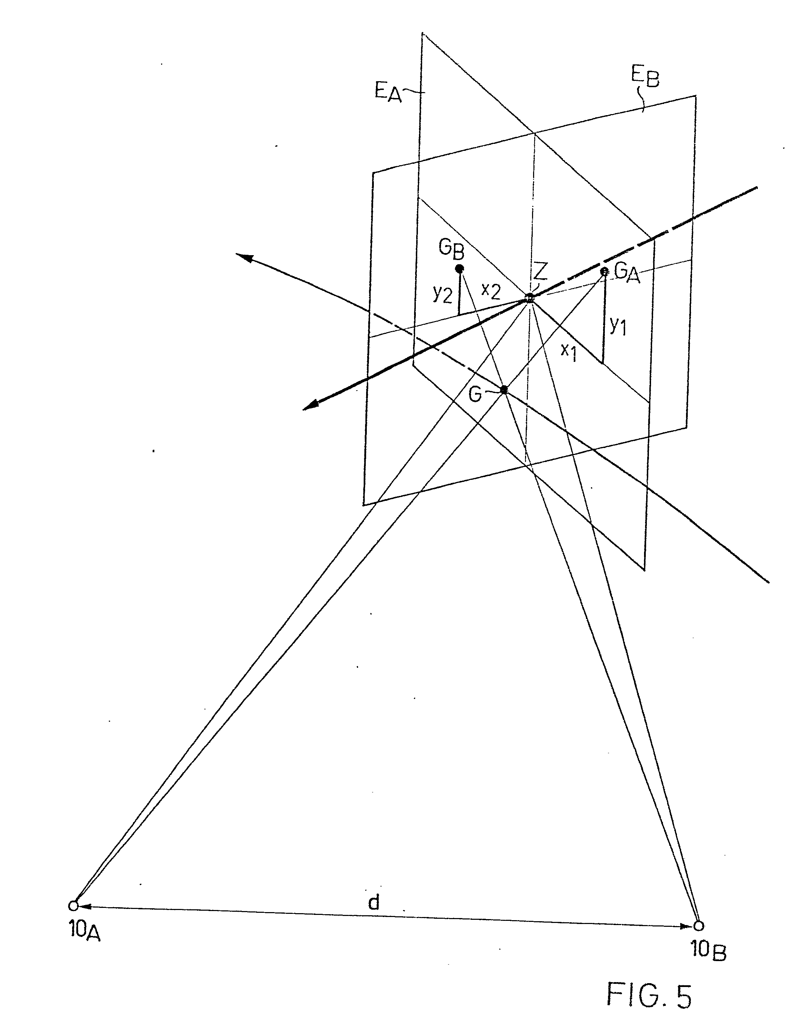

Die optische Achse der Fernsehkamera 10A bzw. 10B steht immer parallel zur optischen Achse des Infrarot-Zielverfolgungsgerätes 12A bzw. 12B. Das zu verfolgende Ziel Z, z.B. ein Schleppflugkörper, eine Schleppscheibe oder eine sogenannte Drohne weist eine Infrarotquelle im Frequenzbereich der Zielverfolgungsgeräte 12A, 12B auf, um die Zielverfolgung zu erleichtern und zu sichern. Die Fernseh-Kameras 10A, 10B sind mit speziellen Zoom-Objekten ausgerüstet, die sich mit Hilfe des Laser-Entfernungsmessers 13 und des Rechners 14 so einstellen lassen, dass die Ebene $E_A$, $E_B$ (Figur 5), in der sich das Ziel Z befindet – unabhängig von der Entfernung des Ziels Z von der Kamera 10A bzw. 10B – immer gleich gross ist. Die Abmessungen dieser Fläche betragen 50 auf 50 Meter.

Mit Hilfe der Zielverfolgungsgeräte 12A, 12B werden die TV-Kameras 10A, 10B so gerichtet, dass sich das Ziel Z immer im Mittelpunkt des Bildes befindet. Der auf dem Bild erscheinende Abstand der Geschosse G vom Ziel Z kann mit Hilfe des zugeordneten Analog-Digital-Wandlers 11A, 11B numerisch in den Rechner 14 eingegeben werden, wie weiter unten ausführlich beschrieben.

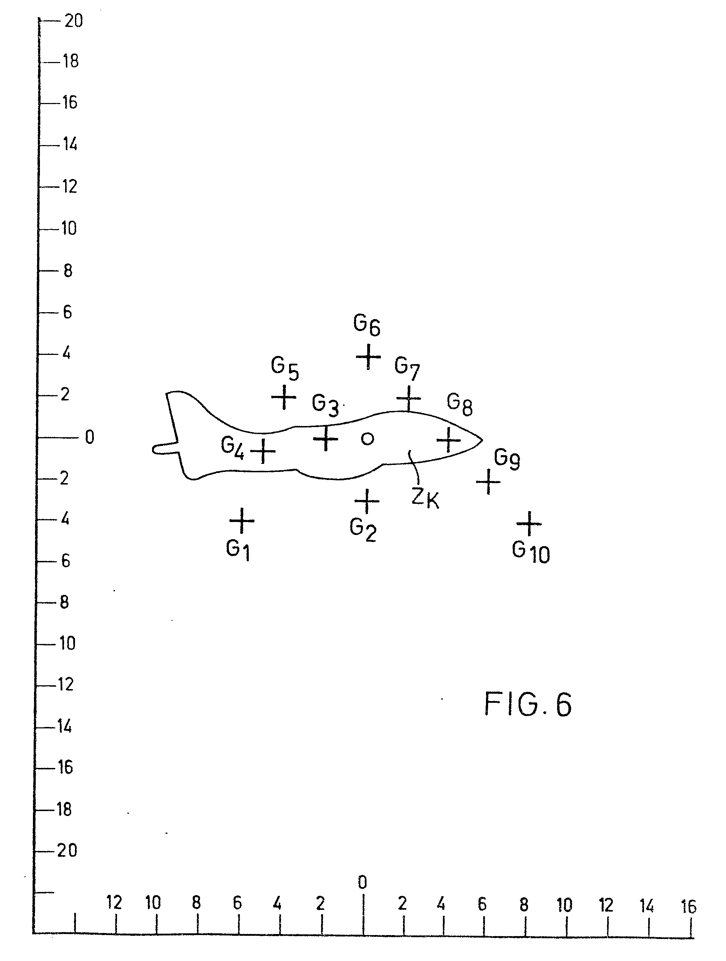

Eine oder mehrere Feuerwaffen 15 sind an den Rechner 14 angeschlossen, um einerseits den Rechner 14 im Moment des Feuerns einzuschalten und um andererseits dem Rechner 14 ihren Standort (d', δ) gegenüber dem Standort der beiden Richt- und Aufnahmegeräte A, B anzugeben. Mit Hilfe eines Taktgebers 16 wird der Beginn jedes Bildes der beiden TV-Kameras 10A, 10B gesteuert. Die Resultate der Schussfehler-Vermessung werden einerseits mit einem Plotter 17 (siehe auch Figur 6) und andererseits mit einem Schreiber 18 ausgedruckt. Die Richtung der beiden TV-Kameras 10A und 10B, d.h. Höhen- und Seitenwinkel $\gamma_{z'}$ $\sigma_z$ werden dem Rechner 14 zugeführt. Der Laser-Entfernungsmesser 13 gibt dem Rechner 14 die Entfernung $e_z$ des Ziels Z vom Richt- und Aufnahmegerät A.

Zusammenfassend werden folgende Daten dem Prozessrechner zugeleitet:
Seitenwinkel des Ziels $\sigma_z$ für TV-Kamera 10A,
Höhenwinkel des Zeils $\gamma_z$ für TV-Kamera 10A,
Entfernung des Ziels $e_z$ für TV-Kamera 10A,
Standort der aktiven Waffen, d', δ

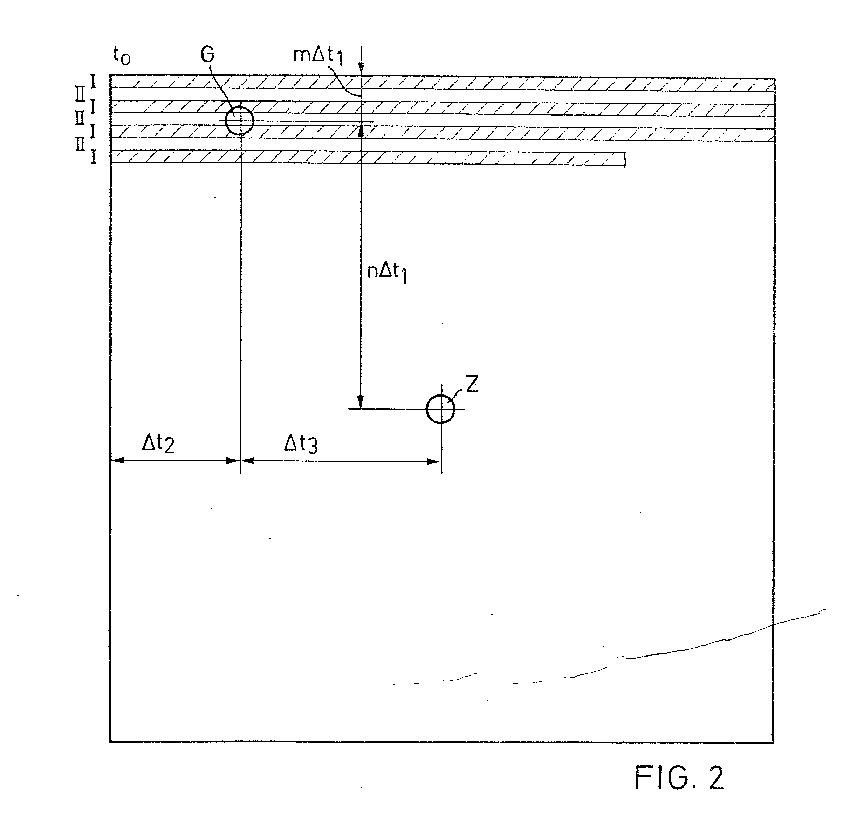

Gemäss Figur 2 und Figur 5 wird aber mit Hilfe der TV-Kameras 10A, 10B auch der Abstand $x_1$, $x_2$; $y_1$, $y_2$ der Geschosse G vom Ziel Z dem Rechner 14 zugeführt. Jede der beiden TV-Kameras 10A, 10B erzeugt 50 Halbbilder pro Sekunde. Jedes Halbbild besteht aus 937,5 Halbzeilen. Die Zeilen des ersten Halbbildes sind in Figur 2 mit I und die Zeilen des zweiten Halbbildes sind mit II bezeichnet. Da, wie oben ausgeführt, die Bildebene 50 × 50 Meter gross ist, ergibt sich eine Zeilenhöhe von 27 Millimeter, nämlich 50 Meter : 1875 Zeilen. Somit werden Geschosse von 35 Millimeter Durchmesser sicher auf jedem Halbbild sichtbar sein. Mit G ist das Geschoss und mit Z das Ziel bezeichnet, wobei sich das Ziel Z im Mittelpunkt des Bildes befindet.

Der Abstand des Geschosses G vom Ziel Z lässt sich aus der Lage von G und Z auf dem Bildschirm berechnen. Der die Zeilen des Bildes erzeugende Elektronenstrahl befindet sich zur Zeit $t_0$ in der oberen linken Ecke des Bildes, zur Zeit $t_1$ erreicht dieser Elektronenstrahl die Stelle, an der das Geschoss G abgebildet ist und zur Zeit $t_2$ erreicht er die Stelle, an der das Ziel Z abgebildet ist. $\Delta t_1$ ist die Zeit, in welcher der Elektronenstrahl eine Zeile aufzeichnet. n ist die Zahl der Zeilen zwischen Geschoss G und Ziel Z. $\Delta t_2$ ist die Zeit, die der Strahl benötigt, um vom linken Bildrand zum Geschoss G zu gelangen, und $\Delta t_3$ ist die Zeit, welche der Strahl benötigt, den horizontalen Abstand zwischen Geschoss G und Ziel Z zurückzulegen. m ist die Zahl der Zeilen zwischen oberem Bildrand und Geschoss G.

$$t_1 = m\Delta t_1 + \Delta t_2$$
$$t_2 = t_1 + n\,\Delta t_1 + \Delta t_3$$

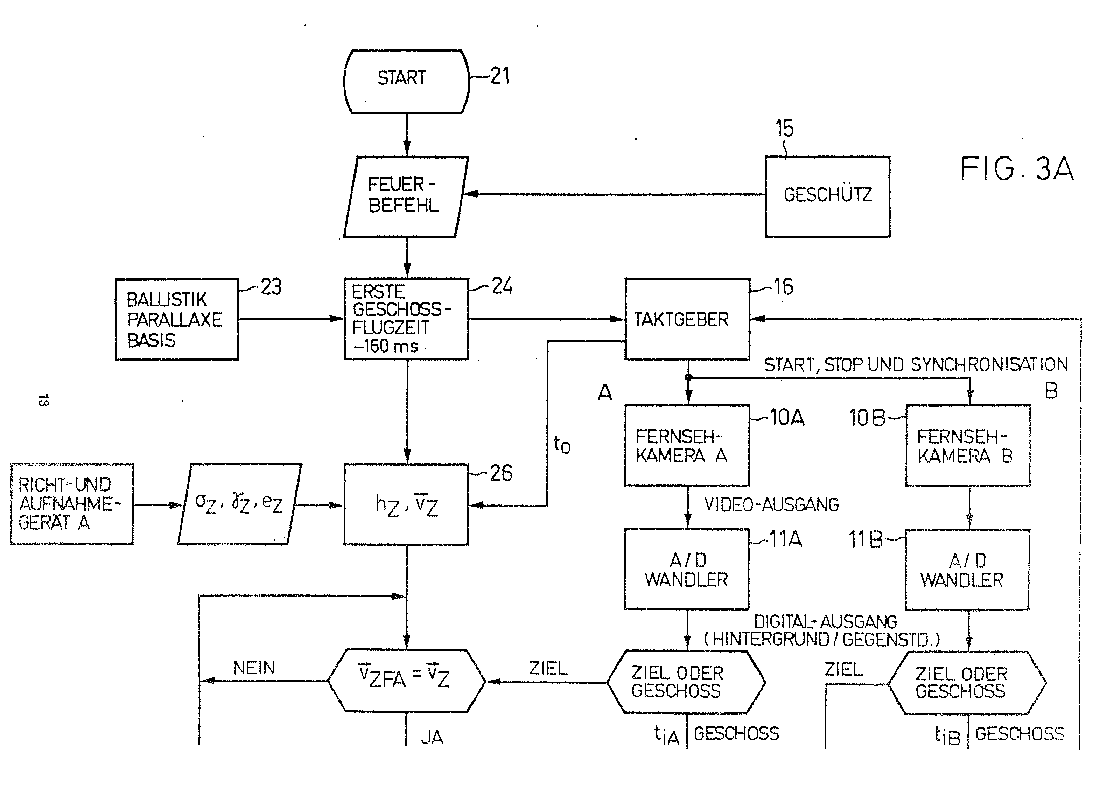

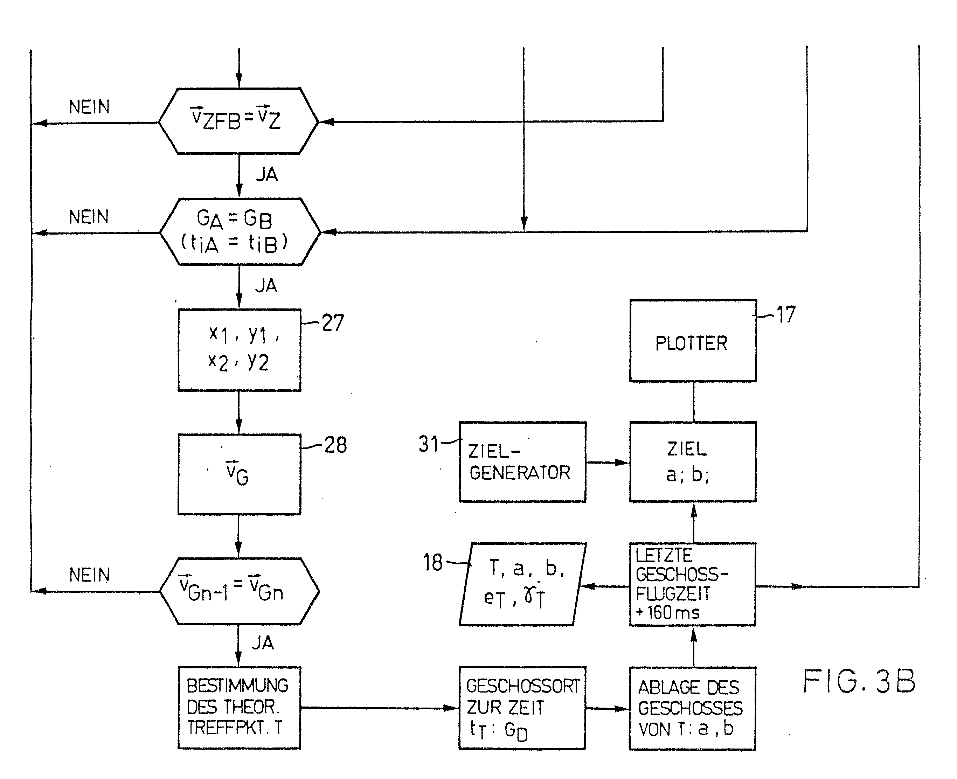

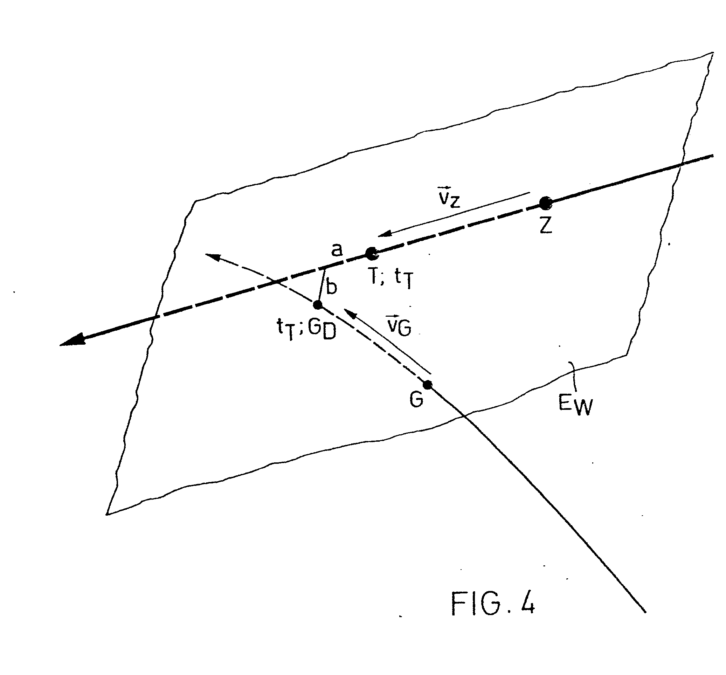

Der Aufbau des Rechners 14 ist aus dem Flussdiagramm Figur 3 ersichtlich. Mit dem Startschalter 21 wird der Rechner 14 eingeschaltet und er beginnt zu rechnen, sobald vom Geschütz (Feuerwaffe) 15 der Feuerbefehl eintrifft. Ausserdem wird aus Speicher 23 dem Rechner 14 der Standort (d', δ) der in Aktion befindlichen Feuerwaffe 15, sowie die Ballistik des Geschosses G gemeldet. Mit Operation 24 wird, 160 Millisekunden bevor das erste Geschoss G in die Nähe des Ziels Z kommt, der Taktgeber 16 eingeschaltet. Vom Richt- und Aufnahmegerät A wird die Lage des Ziels Z, das heisst Zielseitenwinkel $\sigma_z$, Zielhöhenwinkel $\gamma_z$ und Zielentfernung $e_z$ gemeldet. Daraus werden in Operation 26 die Höhe $h_z$ und der Geschwindigkeitsvektor $\vec{v}_z$ des Ziels Z in dem vom Taktgeber 16 bestimmten Zeitpunkt $t_0$ ermittelt. In diesem Zeitpunkt $t_0$ werden vom Taktgeber 16 die TV-Kameras 10A, 10B der Richt- und Aufnahmegeräte A und B gesteuert. Die beiden TV-Kameras 10A, 10B melden über die Analog-Digital-Wandler 11A, 11B die Lage der auf der Speicherplatte erkannten Gegenstände. Gegenstände im Zentrum vom Bildschirm werden als Ziel Z und Gegenstände ausserhalb des Zentrums als Geschosse G bewertet. Zur Kontrolle wird die aus dem Richt- und Aufnahmegerät A ermittelte Zielgeschwindigkeit $\vec{V}_z$ mit den von den Fernsehkameras 10A und 10B ermittelten Zielgeschwindigkeitsvektoren $\vec{V}_{ZFA}$ und $\vec{V}_{ZFB}$ verglichen. Ausserdem wird der Zeitpunkt $t_{iA}$, zu dem ein Geschoss G auf der einen TV-Kamera erscheint, mit dem Zeitpunkt $t_{iB}$, zu dem ein Geschoss auf der anderen TV-Kamera erscheint, verglichen zur Kontrolle, ob beide TV-Kameras 10A, 10B das selbe Geschoss «beobachten». Wenn $t_{iA} = t_{iB}$ ist, werden die horizontalen und vertikalen Abstände $x_1, y_1$ des Geschosses G vom Ziel Z von der ersten TV-Kamera 10A und die horizontalen und vertikalen Abstände $x_2, y_2$ des Geschosses G vom Ziel Z von der zweiten Kamera 10B in Operation 27 aus den Zeitdifferenzen ermittelt. Daraus wird im Rechenvorgang 28 der Geschossgeschwindigkeitsvektor $\vec{V}_G$ berechnet. Gemäss Figur 4 wird aus der Lage des Ziels Z beim Abschuss des Geschosses G, aus dem Zielweg, aus dem Zielgeschwindigkeitsvektor $\vec{V}_z$ und aus dem Geschossgeschwindigkeitsvektor $\vec{V}_G$ der theoretische Treffpunkt berechnet, d.h. die Stelle T, auf die die Feuerwaffe 15 im Zeitpunkt $t_0$ des Abfeuerns hätte gerichtet sein müssen. Ferner wird aus der durch die TV-Kameras 10A, 10B bestimmten Geschossflugbahn der Ort $G_D$ des Geschosses G berechnet, an dem es sich im Zeitpunkt $t_T$ befindet, d.h. dem Zeitpunkt, in dem sich das Ziel Z an der Stelle T befindet. Anschliessend werden die Abstände a, b des Geschosses $G_D$ zur Zeit $t_T$ vom Ziel Z bestimmt. Schliesslich werden gemäss Figur 6 mit dem Blattschreiber 18 die wesentlichen Daten gedruckt und wird mit dem Plotter 17 die Lage der Geschosse G gegenüber einem vom Zielgenerator 31 erzeugten künstlichen Ziel $Z_K$ dargestellt.

Gemäss Figur 5 sind die beiden Fernsehkameras 10A und 10B in einem Abstand d voneinander angeordnet. Jede bildet eine Ebene $E_A, E_B$ ab, in der sich das Ziel Z befindet und die senkrecht steht zur Verbindungslinie von der TV-Kamera 10A bzw. 10B zum Ziel Z. Diese Ebene $E_A, E_B$ ist dank dem speziellen Zoom-Objektiv der beiden TV-Kameras 10A, 10B – wie bereits ausgeführt – immer gleich gross, d.h. sie ist 50 × 50 Meter gross. Das Geschoss G, das sich von den TV-Kameras 10A, 10B vor den Ebenen $E_A, E_B$ befindet, wird gemäss Figur 5 rechtwinklig auf diese Ebenen $E_A, E_B$ projiziert. Diese Projektionen sind dann entsprechend mit $G_A$ und $G_B$ bezeichnet. Mit Hilfe der TV-Kameras 10A, 10B kann der Abstand der Geschossprojektionen $G_A, G_B$ vom Ziel Z gemessen werden. Diese Messung ist bereits ausführlich anhand der Figur 2 beschrieben worden. Diese Abstände werden in einen horizontalen Abstand $x_1$ und $x_2$ und in einen vertikalen Abstand $y_1$, $y_2$ zerlegt.

In Figur 5 sind ferner noch die Geschossflugbahn und der Zielweg eingezeichnet, sowie die Stellen, an denen die Geschossflugbahn die beiden Ebenen $E_A$ und $E_B$ durchdringt.

Damit Geschoss G und Ziel Z mit Sicherheit von den TV-Kameras 10A und 10B unterschieden werden können, wird die Kamera – wie bereits ausgeführt – 160 Millisekunden vor dem Zeitpunkt $t_T$, d.h. dem Zeitpunkt, in dem das erste Geschoss G theoretisch das Ziel Z treffen müsste – eingeschaltet und 160 Millisekunden nach dem Zeitpunkt, in dem das letzte Geschoss G theoretisch das Ziel Z treffen müsste, ausgeschaltet. Damit wird erreicht, dass von jedem Geschoss G mehrere Bilder $G_A$ und $G_B$ entstehen, während das Ziel Z sich dank der Genauigkeit der Zielverfolgungsgeräte 12A, 12B immer im Bildmittelpunkt befindet.

In Figur 4 ist eine Ebene $E_W$ dargestellt, in der sich das Ziel Z im erwähnten Zeitpunkt $t_T$ befindet. Diese Ebene $E_W$ steht senkrecht zur Verbindungslinie von der Feuerwaffe 15 zum Ziel Z. Da die Feuerwaffe 15 im Abstand von den beiden TV-Kameras 10A und 10B angeordnet ist, fällt die Ebene $E_W$ nie mit den bereits erwähnten Ebenen $E_A$ und $E_B$ zusammen. Da für den Schützen die Schussfehler, d.h. die Abstände des Geschosses G vom Ziel Z nur von seinem Standpunkt aus und nicht vom Standpunkt der beiden TV-Kameras 10A, 10B von Interesse ist, müssen die Schussfehler, d.h. die Abstände des Geschosses G vom Ziel Z in der Ebene $E_W$ vom Rechner 14 berechnet werden. Diese Umrechnung der Koordinaten $x_1$, $y_1, x_2, y_2$ aus den Ebenen $E_A$ und $E_B$ in die Koordinaten a, b in der Ebene $E_W$ ist eine einfache Koordinatentransformation, die vom Rechner 14 in an sich bekannter Weise durchgeführt werden kann.

Gemäss Figur 6 wird auf dem Bildschirm des Plotters die erwähnte Ebene $E_W$ abgebildet. Auf diesem Bildschirm wird mit Hilfe des Zielgenerators ein künstliches Bild $Z_K$ des Ziels Z erzeugt und anhand der erwähnten Berechnung der Abstände der Geschosse G vom Ziel Z werden die Geschosse $G_1$ bis $G_{10}$ auf dem Plotterbildschirm angezeigt. Ausserdem werden vom Blattschreiber die horizontalen und vertikalen Abstände ausgedruckt.

**Patentansprüche**

1. Verfahren zum Vermessen der Schussfehler beim Schiessen auf ein in der Luft bewegliches Ziel (Z) mittels einer Feuerwaffe (15) und zum Aufzeichnen der gemessenen Schussfehler, bei dem die Höhen- und Seitenwinkel ($\gamma_z$, $\sigma_z$) des Ziels (Z) gegenüber sowie die Entfernung ($e_z$) des Ziels (Z) von einem Bezugspunkt laufend gemessen und die Daten dieser Messungen in einem Prozessrechner (14) gespeichert werden, dadurch gekennzeichnet,

a. dass zwei im Abstand (d) voneinander angeordnete TV-Kameras (10A, 10B) auf die Höhen- und Seitenwinkel ($\gamma_z$, $\sigma_z$) eingestellt und dem Ziel (Z) so nachgeführt werden, dass sich das Ziel (Z) immer im Mittelpunkt des Bildes auf den Speicherplatten der TV-Kameras (10A, 10B) befindet, und

b. dass aus der unterschiedlichen Lage der Bildpunkte des Ziels (Z) und der Geschosse (G) in den Videobildern der beiden TV-Kameras (10A, 10B) unter Berücksichtigung der Abstände des Ziels (Z) von den beiden TV-Kameras (10A, 10B) die zweidimensionalen Abstände $(x_1, y_1, x_2, y_2)$ der Geschossprojektionen $(G_A, G_B)$ auf die jeweilige, durch das Ziel (Z) gehende Bildebene $(E_A, E_B)$ vom Ziel (Z) ermittelt und dem Rechner (14) zugeleitet werden, der

– hieraus unter Berücksichtigung der unterschiedlichen Kamerastandorte den Ort $(G_D)$ des Geschosses (G) berechnet, an dem es sich im dem Zeitpunkt $(t_T)$ befindet, an dem sich das Ziel (Z) an der Stelle (T) des theoretischen Treffpunkts befindet, auf den die Feuerwaffe (15) im Zeitpunkt des Abfeuerns $(t_o)$ hätte gerichtet sein müssen,

– hiermit und aus dem gemessenen Ort des Ziels (Z), an dem sich dieses zum selben Zeitpunkt $(t_T)$ befindet, den Abstand der Projektionen auf die senkrecht zur Verbindungslinie von der TV-Kamera (10A bzw. 10B) zum Ziel (Z) stehende Ebene $(E_A$ bzw. $E_B)$, in der sich jeweils das Ziel (Z) befindet, des Geschosses (G) im genannten Zeitpunkt $(t_T)$ vom Ziel (Z) berechnet und

– hieraus die Abstände (a, b) des Geschosses (G) vom Ziel (Z) in einer senkrecht zur Verbindungslinie von Feuerwaffe (15) zum Ziel (Z) befindlichen Zielebene $(E_W)$ berechnet und anzeigt.

2. Verfahren nach Anspruch 1, dadurch gekennzeichnet, dass der auf den Speicherplatten der TV-Kameras (10A, 10B) abgebildete Teil der Gegenstandsebene, in der sich das Ziel (Z) befindet, unabhängig von der Entfernung des Ziels (Z) vom Bezugspunkt stets die gleiche Grösse hat.

3. Schussfehler-Vermessungs-Anlage zur Durchführung des Verfahrens nach Anspruch 1 oder 2,

– mit einer TV-Kamera (10A) zum Verfolgen des beweglichen Ziels (Z) in der Luft,

– mit einem Höhen- und Seiten-Kodiergerät, zum Messen der Lage der Sichtziellinie,

– mit einem Entfernungsmessgerät (13) zum Bestimmen der Entfernung $(e_z)$ des Ziels (Z) vom Bezugspunkt und

– mit einem Prozessrechner (14), der mit dem Kodiergerät und dem Entfernungsmessgerät (13) verbunden ist,

gekennzeichnet durch

– eine zweite (10B) im genau gemessenen Abstand (d) von der ersten (10A) angeordnete TV-Kamera,

– je ein Zielverfolgungsgerät (12A, 12B) zum Richten der beiden TV-Kameras (10A, 10B) auf das Ziel (Z),

– einen Analog-Digital-Wandler (11A, 11B), um den auf den Speicherplatten der beiden TV-Kameras (10A, 10B) erscheinenden Abstand zwischen den Bildpunkten des Ziels (Z) und den Bildpunkten der Geschosse (G) in digitale Form umzusetzen, und

– eine solche Ausbildung des Prozessrechners (14), dass er durch ein Programm steuerbar ist, durch welches aus den aus der unterschiedlichen Lage der Bildpunkte des Ziels (Z) und der Geschosse (G) in den Videobildern der beiden TV-Kameras (10A, 10B) unter Berücksichtigung der Abstände des Ziels (Z) von den beiden TV-Kameras (10A, 10B) die zweidimensionalen Abstände $(x_1, y_1, x_2, y_2)$ der Geschossprojektionen $(G_A, G_B)$ auf die jeweilige, durch das Ziel (Z) gehende Ebene $(E_A, E_B)$ vom Ziel (Z) ermittelten und dem Rechner (14) zugeleiteten Daten die Abstände (a, b) in der senkrecht zur Verbindungslinie von Feuerwaffe (15) zum Ziel (Z) befindlichen Zielebene $(E_w)$ berechnet werden.

**Claims**

1. Method of measuring shooting errors during firing at a moving airborne target (Z) by a gun (15), and for scoring the measured shooting errors, wherein elevation angle $(\gamma_z)$ and azimuth angle $(\sigma_z)$ as well as the distance $(e_z)$ of the target (Z) in relation to a reference point are continuously measured, the data of the measurement results being stored in a process computer (14), characterized by

a. two tv-cameras (10 A, 10 B) arranged in the distance (d), positioned in direction of elevation angle $(\gamma_z)$ and azimuth angle $(\sigma_z)$ of the precisely tracked target (Z), wich by this way will continuously be located in the centre of the storage target of the tv-cameras (10 A, 10 B), and

b. the computation of the twodimensional distances $(x_1, y_1, x_2, y_2)$ of the projections of the projectiles $(G_A, G_B)$ on the image plane $(E_A, E_B)$ through the target (Z) by the different locations of the image points of the target (Z) and the projectiles (G) in the video images of both tv-cameras (10 A, 10 B), whereby the distances of the target (Z) from the tv-cameras (10 A, 10 B) will be taken into account and fed into the computer (14), wich

– computes the momentary $(t_T)$ location $(G_D)$ of the projectile (G), when the target is penetrating the theoretical hitting point (T), on wich the gun (15) should have been trained at firing moment $(t_o)$, taking into consideration the different positions of the tv-cameras,

– computes the aforementioned dates together with the measured location at present time $(t_T)$ of the target, computes the distance of projection of the projectile on the plane perpendicular to the straight line from tv-camera (10 A or 10 B) to the target (Z) in its actual position,

– hereby computes and indicates the distances (a, b) of the projectile (G) form the target (Z) in a target plane $(E_w)$, wich is perpendicular to the straight line from the gun (15) to the target (Z).

2. Method according to claim 1, characterized in that the imaged portion of the target plane, in which target is located – independently of the distance of the target (Z) from reference point – is always displayed in the same size.

3. Shooting error measurement device for carrying out the method of claim 1 or 2,
 – with a tv-camera (10 A) for tracking the moving airborne target (Z),
 – with an azimuth-/ elevation – encoder for measuring the position of the line – of – sight,
 – with a range – finder (13) for determining the distance (e$_z$) between the target (Z) and the reference point, and
 – with a process computer (14), operatively connected with the encoder and the rangefinder (13),
characterized by
 – a second tv-camera (10 B) arranged at a precisely measured distance from the first tv-camera (10 A),
 – tracking devices (12 A, 12 B) for training both tv-cameras (10 A, 10 B) at the target (Z),
 – an analogue – digital – converter (11A, 11 B) for digital conversion of the distance between the image point of the target (Z) and the image points of the projectiles (G) on the storage target of both tv-cameras,
 – a process computer controllable by a programme computing the distances (a, b) in the target plane, wich is perpendicular to the straight line from gun (15) to target (Z); the computation is resulting from the data of the twodimensional distances (x$_1$, y$_1$, x$_2$, y$_2$) of the projections of the projectiles (G$_A$, G$_B$) on the actual plane (E$_A$, E$_B$) through the target (Z), considering the different locations of the image points of the target (Z) and the projectiles (G) in the video pictures of both tv-cameras (10 A, 10 B).

## Revendications

1. Procédé pour mesurer des erreurs de tir lors de l'engagement d'un objectif aérien mobile (Z) par une arme à feu (15) et pour enregistrer les erreurs de tir ainsi mesurées; ce procédé qui consiste à mesurer de manière continue l'angle de site et l'angle de gisement ($\gamma_z$, $\sigma_z$) de l'objectif (Z) ainsi que sa distance (e$_z$) par rapport à un point de référence et à mémoriser les valeurs de mesure ainsi obtenues dans un calculateur (14), caractérisé en ce que
a. deux caméras de télévision (10 A, 10 B), disposées à une distance (d) l'une de l'autre et pointées sur l'objectif selon les angles de site et de gisement ($\gamma_z$, $\sigma_z$), sont amenées à poursuivre l'objectif (Z) de telle manière que l'objectif (Z) figure toujours au centre de l'image créée sur les plaques des caméras de télévision (10 A, 10 B);
b. tenant compte de la position différente, sur l'image vidéo des deux caméras de télévision (10 A, 10 B), des points-image représentant l'objectif (Z) et les projectiles (G), tenant compte également des distances entre l'objectif (Z) et les deux caméras de télévision (10 A, 10 B), on détermine les écarts bidimensionnels

(x$_1$, y$_1$, x$_2$, y$_2$) entre, d'une part, les projections de projectile (G$_A$, G$_B$) sur les plans-image (E$_A$, E$_B$) passant par l'objectif (Z) et, d'autre part, l'objectif (Z) lui-même, et on les introduit dans le calculateur (14);
le calculateur (14),
 – utilisant ces valeurs et tenant compte de la position différente des deux caméras, calcule la position (G$_D$) du projectile (G) que celui-ci occupe à l'instant (t$_T$); à cet instant (t$_T$) l'objectif (Z) se trouve à l'endroit (T) qui correspond au point d'impact théorique, c'est-à-dire au point sur lequel l'arme à feu (15) aurait dû être pointée à l'instant (t$_o$) du tir;
 – utilisant cette dernière valeur et tenant compte de la position mesurée de l'objectif (Z), occupée par celui-ci au même instant (t$_T$), calcule pour cet instant (t$_T$) l'écart entre, d'une part, les projections du projectile (G) sur un plan (E$_A$, E$_B$ suivant le cas) passant par l'objectif (Z) et perpendiculaire à l'axe reliant la caméra de télévision (10 A, 10 B suivant le cas) et, d'autre part, l'objectif (Z) lui-même;
 – utilisant ces dernières valeurs, calcule et affiche les écarts (a, b) entre le projectile (G) et l'objectif (Z) dans un plan (E$_w$) passant par l'objectif et perpendiculaire à l'axe reliant l'arme à feu (15) et l'objectif (Z).

2. Procédé selon la revendication 1, caractérisé par le fait que la partie du plan-objet passant par l'objectif (Z) et reproduit sur les plaques des caméras de télévision (10 A, 10 B), a toujours les mêmes dimensions, quelle que soit la distance entre l'objectif (Z) et le point de référence.

3. Dispositif de mesure de ces erreurs pour la mise en œuvre de ce procédé selon les revendications 1 ou 2, avec
 – une caméra de télévision (10 A) qui doit poursuivre l'objectif mobile (Z) dans l'air,
 – un codeur de site et de gisement qui doit mesurer l'orientation de la ligne de visée,
 – un télémètre (13) qui doit déterminer la distance (e$_z$) entre l'objectif (Z) et le point de référence,
 – un calculateur (14) qui est relié avec le codeur et le télémètre (13);
caractérisé par
 – une deuxième caméra de télévision (10 B) disposée par rapport à la caméra (10 A) à une distance (d) mesurée avec précision;
 – deux équipements de poursuite d'objectifs (12 A, 12 B) qui doivent pointer sur l'objectif (Z) les deux caméras de télévision (10 A, 10 B);
 – deux convertisseurs analogique-digital (11 A, 11 B) qui doivent transformer en données digitales les écarts apparaissant sur les plaques des deux caméras de télévision (10 A, 10 B) entre les points-image de l'objectif (Z) et les points-image des projectiles (G);
 – un calculateur capable de traiter un programme calculant les écarts (a, b) sur un plan (E$_w$) passant par l'objectif (Z) et perpendiculaire à l'axe reliant l'arme à feu (15) et l'objectif (Z); le calcul se fait à l'aide des données, introduites dans le calculateur, relatives aux écarts

bidimensionnels ($x_1$, $y_1$, $x_2$, $y_2$) entre, d'une part, les projections de projectile ($G_A$, $G_B$) sur le plan ($E_A$ ou $E_B$, suivant le cas), passant par l'objectif (Z) et, d'autre part l'objectif (Z) lui-même, et il tient compte de la position différente des points-image représentant l'objectif (Z) et les projectiles (G) dans les images vidéo des deux caméras de télévision (10 A, 10 B).

FIG. 1

FIG. 2

FIG. 3A

**START** —21

**FEUER-BEFEHL**

**GESCHÜTZ** —15

**BALLISTIK PARALLAXE BASIS** —23

**ERSTE GESCHOSS-FLUGZEIT −160 ms** —24

**TAKTGEBER** —16

START, STOP UND SYNCHRONISATION

A

B

**FERNSEH-KAMERA A** —10A

10B— **FERNSEH-KAMERA B**

$t_0$

**RICHT-UND AUFNAHME-GERÄT A**

$\sigma_Z, \gamma_Z, e_Z$

$h_Z, \vec{v}_Z$ —26

VIDEO-AUSGANG

**A/D WANDLER** —11A

11B— **A/D WANDLER**

DIGITAL-AUSGANG (HINTERGRUND / GEGENSTD.)

NEIN

$\vec{v}_{ZFA} = \vec{v}_Z$

ZIEL

**ZIEL ODER GESCHOSS**

ZIEL

**ZIEL ODER GESCHOSS**

JA

$t_{iA}$ GESCHOSS

$t_{iB}$ GESCHOSS

NEIN ← $\vec{v}_{ZFB} = \vec{v}_Z$

JA

NEIN ← $G_A = G_B$ $(t_{iA} = t_{iB})$

JA

x1, y1, x2, y2 — 27

$\vec{v}_G$ — 28

NEIN ← $\vec{v}_{Gn-1} = \vec{v}_{Gn}$

JA

BESTIMMUNG DES THEOR. TREFFPKT. T

GESCHOSSORT ZUR ZEIT $t_T$: $G_D$

ABLAGE DES GESCHOSSES VON T: a , b

LETZTE GESCHOSS-FLUGZEIT +160 ms

18 — T, a, b, $e_T$, $\gamma_T$

31 — ZIEL-GENERATOR → ZIEL a; b;

PLOTTER — 17

FIG. 3B

FIG. 4

FIG. 5

FIG. 6